# EUROPÄISCHE PATENTSCHRIFT

(11) **EP 1 116 677 B1**
(45) Veröffentlichungstag und Bekanntmachung des Hinweises auf die Patenterteilung: **14.09.2005**
(21) Anmeldenummer: 00128044.5
(22) Anmeldetag: 21.12.2000
(51) Int. Cl.: B65G 47/90, B65H 31/30, B25J 15/02

(54) **Vorrichtung zum Transportieren und Positionieren, insbesondere von Lagen aus gestapeltem, blattförmigem Gut**
Apparatus for transporting and positioning, in particular for bundles of stacked sheet material
Dispositif pour le transport et le positionnement de rames de matériau en feuille empilé

(30) Priorität: 13.01.2000 DE 20000525 U
(43) Veröffentlichungstag der Anmeldung: 18.07.2001
(73) Patentinhaber: Baumann Maschinenbau Solms GmbH & Co. KG, 35606 Solms (DE)
(72) Erfinder: Assmann, Volkmar, 35768 Siegbach (DE); Schmitt, Berthold, 35638 Leun (DE)
(74) Vertreter: Schmidt, Ursula

(56) Entgegenhaltungen:
- EP-A- 0 377 400
- EP-A- 0 429 941
- US-A- 4 787 810
- US-A- 4 911 608
- US-A- 5 169 284
- US-A- 5 380 147
- PATENT ABSTRACTS OF JAPAN vol. 007, no. 244 (M-252), 28. Oktober 1983 (1983-10-28) & JP 58 130824 A (OKURA YUSOKI KK), 4. August 1983 (1983-08-04)

## Beschreibung

Die Erfindung betrifft eine Vorrichtung zum Transportieren und Positionieren, insbesondere von Lagen aus gestapeltem, blattförmigem Gut, auf einer Arbeitsfläche mit zumindest einem eine Greifzange aufweisenden Greifer, welcher im wesentlichen parallel zur Arbeitsfläche verfahrbar ist, wobei eine der Zangenbacken höhenverstellbar ist (siehe z.B. das Dokument EP0377400).

Derartige Vorrichtungen werden z.B. in Druckereien benötigt, um Lagen aus Papier einer Schneidmaschine zuzuführen. Dazu werden die Lagen von dem Greifer erfasst und über die Arbeitsfläche, dabei handelt es sich in der Regel um Lufttische, gezogen und an bzw. in der Schneidmaschine entsprechend den Erfordernissen positioniert. Eine derartige Vorrichtung ist aus der EP O 429 941 B1 bekannt. Diese Druckschrift offenbart einen Greifer, welcher eine Greifzange aufweist und eine parallel zur Tischoberfläche liegende Greifebene (d. h. ein parallel zur Tischoberfläche liegendes Zangenmaul) hat. Der Greifer ist dabei so ausgebildet, dass er senkrecht und parallel zur Tischoberfläche verfahrbar und um eine Drehachse senkrecht zum Tisch drehbar ist. Außerdem ist die obere Zangenbacke relativ zur unteren höhenverschiebbar. Ausweislich der Druckschrift sind Greifer und obere Zangenbacke höhenverschiebbar, Insgesamt sind an dem Greifer daher vier Antriebe vorzusehen, mit welchen der Greifer translatorisch verfahren werden kann. Nachteilig ist dabei, dass für diese vier Antriebe für die Linearbewegungen Führungen notwendig sind, in welchen der geführte Gegenstand oftmals verkantet und wodurch auch eine kompakte Bauform der Greifzange nicht immer möglich ist.

Der Erfindung liegt daher die Aufgabe zugrunde, eine Vorrichtung vorzuschlagen, mit welcher Lagen von blattförmigem Gut transportiert und positioniert werden können, wobei die Vorrichtung mit einer möglichst geringen Zahl von linearen Führungen auskommt.

Diese Aufgabe wird erfindungsgemäß dadurch gelöst, dass der Greifer um eine im wesentlichen parallel zur Arbeitsfläche und im wesentlichen quer zum Zangenmaul liegenden Schwenkachse schwenkbar ist.

Im Gegensatz zu der aus der EP O 429 041 B1 bekannten Vorrichtung ist bei der erfindungsgemäßen Vorrichtung zum Ergreifen einer Lage mit der positionierten Greifzange nur ein Linearantrieb notwendig, nämlich ein Antrieb zum Verstellen der einen Zangenbacke relativ zu der zweiten. Außerdem wird ein weiterer Antrieb zum Verschwenken des Greifers benötigt. Zum Ergreifen einer Lage muss dazu entweder die Lage leicht angehoben werden oder durch andere geeignete Maßnahmen dafür gesorgt werden, dass die zu ergreifende Kante der Lage frei zugänglich ist. Dann wird der Greifer an die Lage herangefahren, die Zange wird geöffnet und der Greifer so verschwenkt, dass das freie Ende der unteren Zangenbacke unterhalb der zu ergreifenden Kante der Lage kommt. Sodann wird der Greifer in Richtung der Lage gefahren, so dass sich die Kante in das geöffnete Zangenmaul hineinschiebt. Nun wird die Greifzange in ihre waagerechte Position zurückgeschwenkt und anschließend geschlossen. Durch diese Art des Ergreifens kann der Greifer so gestaltet werden, dass auf eine Höhenverschiebbarkeit des Greifers verzichtet werden kann.

Gemäß der Erfindung kann der Greifer parallel zur Arbeitsfläche drehbar sein.

Erfindungsgemäß ist vorteilhaft nur die obere Zangenbacke der Greifzange zum Öffnen und Schließen der Zange verstellbar. Für das Ergreifen der Lage ist es erfindungsgemäß ausreichend, wenn nur die untere Zangenbacke um die Schwenkachse verschwenkbar gelagert ist. Ebenfalls wäre es ausreichend, wenn nur die untere Zangenbacke und die Halterung um die Schwenkachse verschwenkbar ist.

Vorteilhaft ist der Greifer an einem in einer ersten Richtung parallel zur Arbeitsfläche verfahrbaren Schlitten angebracht. Dieser Schlitten kann dann in einer zweiten Richtung senkrecht zu der ersten verfahrbar sein.

Gemäß der Erfindung können in der Arbeitsfläche Ausnehmungen vorgesehen sein, wobei vorteilhaft die Ausnehmungen Kehlen sind. Wird die Lage nun zunächst so abgelegt, dass die zu ergreifende Kante oberhalb der Ausnehmungen liegen, liegt zumindest ein Abschnitt der Kante frei zugänglich, so dass die geöffnete und verschwenkte Zange unter diese Kante greifen kann. Ebenso ist es möglich, dass die Kante der Arbeitsfläche abgeschrägt oder gekehlt ist, so dass auch hier eine zu ergreifende Kante der Lage frei zugänglich liegen kann.

Gemäß der Erfindung kann die untere Zangenbacke gabelförmig mit Zinken ausgebildet sein, wobei dann die Kanten der Arbeitsfläche Ausnehmungen aufweisen, deren Abmessungen etwas größer als die Zinken sind.

Ein Ausführungsbeispiel für eine erfindungsgemäße Vorrichtung ist anhand der Zeichnung näher beschrieben. Darin zeigt
- Fig. 1: eine Seitenansicht eines Greifers einer erfindungsgemäßen Vorrichtung,
- Fig. 2: die Frontansicht des Greifers,
- Fig. 3: eine Draufsicht auf den Greifer,
- Fig. 4: einen horizontalen Schnitt durch den Greifer gemäß der Linie IV-IV in Fig. 2,
- Fig. 5: einen weiteren horizontalen Schnitt gemäß der Linie V-V in Fig. 2,
- Fig. 6: einen vertikalen Schnitt durch den Greifer gemäß der Linie VI-VI in Fig. 2,
- Fig. 7: eine Montagemöglichkeit für den erfindungsgemäßen Greifer in schematischer Darstellung,
- Fig 8.: die Stellung des Greifers unmittelbar vor dem Ergreifen einer Lage und
- Fig. 9: den Greifer während des Ergreifens einer Lage.

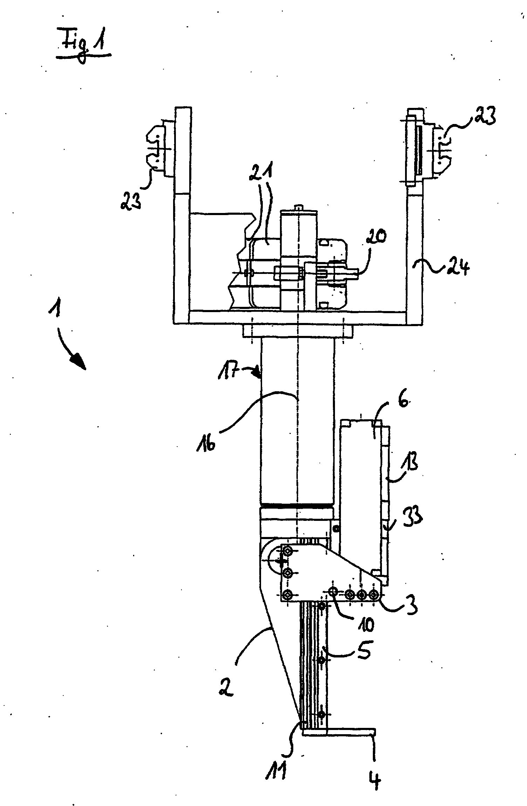

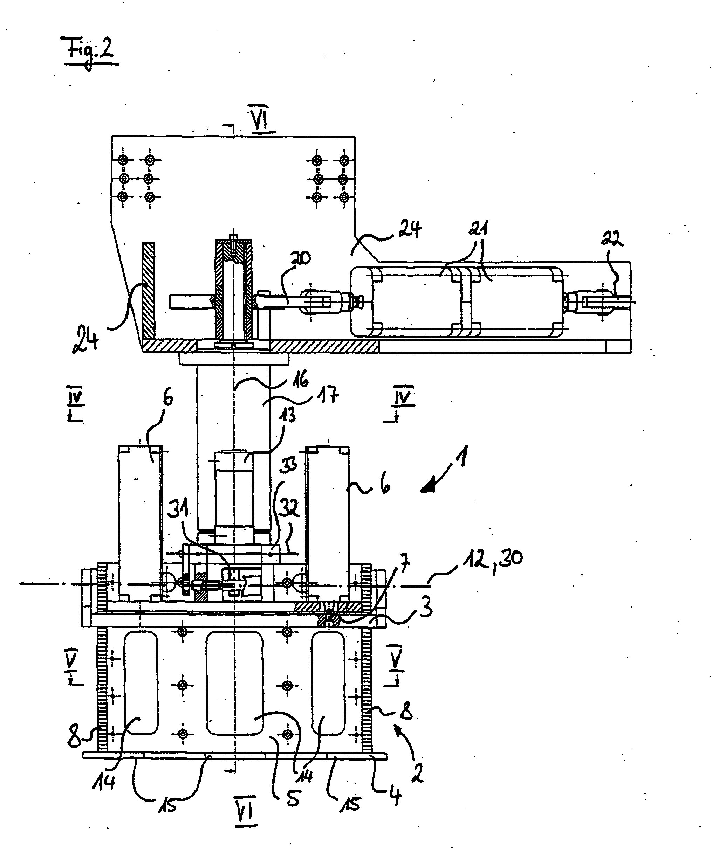

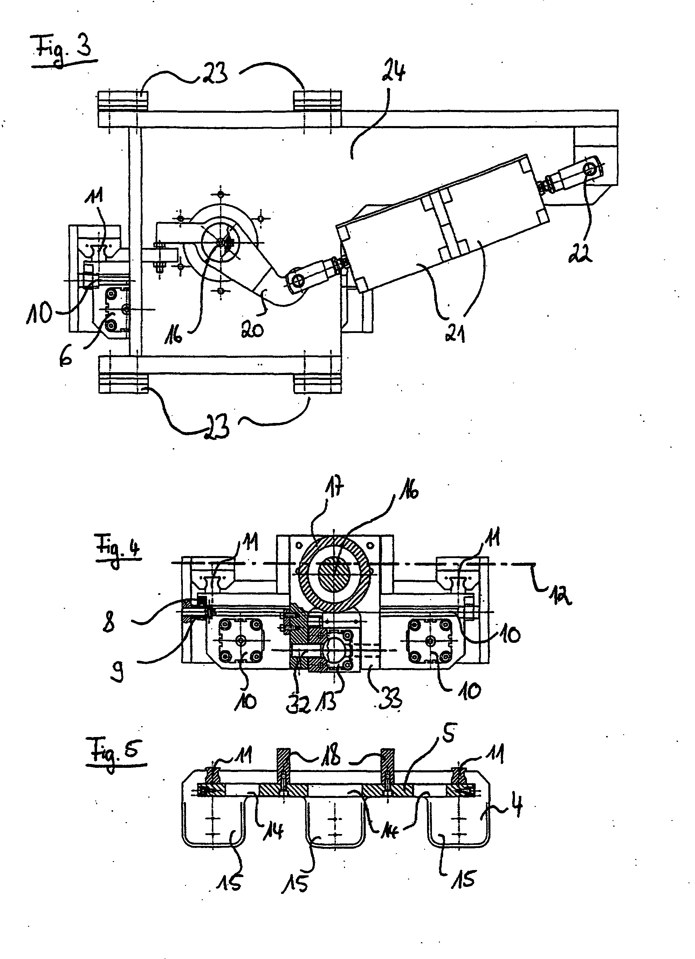

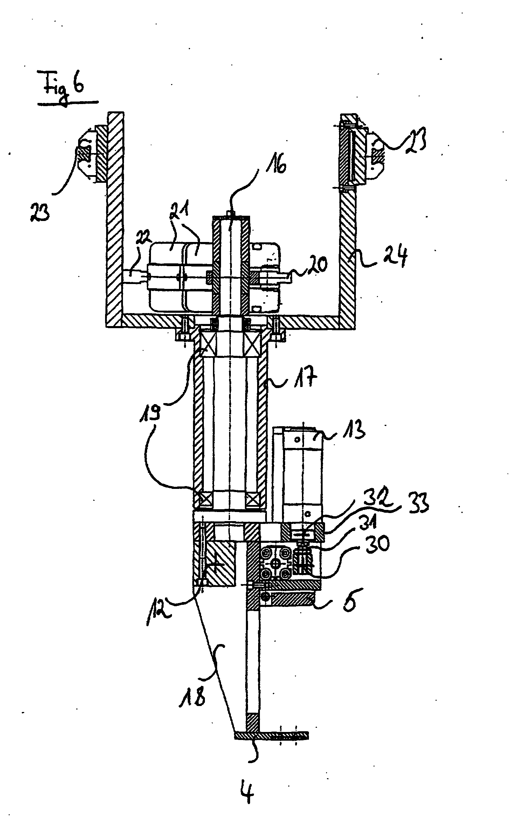

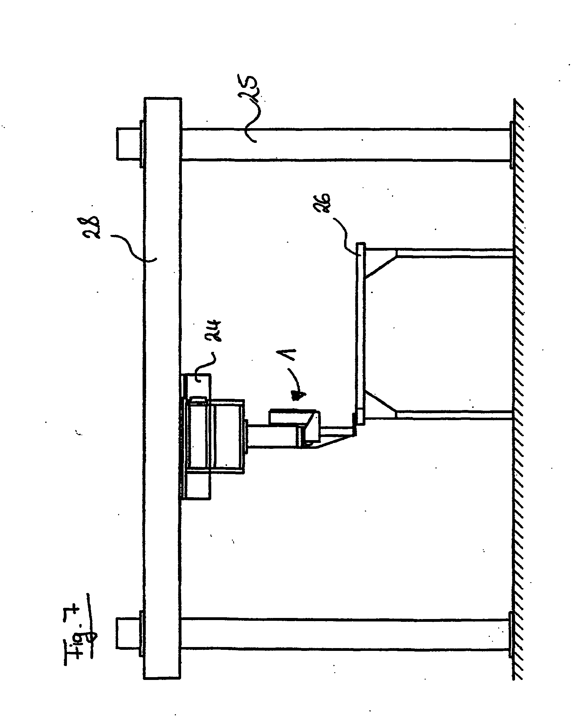

Der Greifer 1 der erfindungsgemäßen Vorrichtung ist an einem Schlitten 24 um die Drehachse 16 drehbar befestigt. Der Schlitten 24 ist dabei über Führungselemente 23 an einer Quertraverse parallel zu der Tischplatte eines Tisches 26 verfahrbar (Fig. 7). Die Quertraverse selbst ist wiederum an Ständern 25 verfahrbar gelagert. An der Unterseite des Schlittens 24 ist ein Gehäuse 17 für die Drehachse 16 angeschraubt (Fig. 1 - 6). In diesem Gehäuse 17 befinden sich Lager 19, in welchen die Drehachse 16 ruht. Nach oben hin ragt die Drehachse 16 über das Gehäuse 17 der Drehachse 16 hinaus. An diesem Ende der Drehachse ist eine Kurbel 20 drehfest angebracht. Das Ende der Kurbel 20 ist drehbar mit einer Kolbenstange eines Drehzylinders 21 befestigt. Der Drehzylinder 21 ist wiederum an einem zweiten Drehzylinder 21 angeflanscht, wobei die Kolbenstange des zweiten Drehzylinders 21 an einem ortsfest mit dem Schlitten 24 verbundenen Widerlager 22 drehbar verbunden ist. Werden also beide Kolbenstangen der Drehzylinder 21 ausgefahren, verlängert sich der Weg zwischen der Kurbel 20 und dem Widerlager 22. Dadurch wird eine Drehbewegung des Greifers 1, welcher mit dem unteren Ende der Drehachse 16 verbunden ist, bewirkt.

An dem unteren Ende der Drehachse 16 ist, wie bereits ausgeführt, die Greifzange 2 des Greifers 1 um eine parallel zur Arbeitsfläche und quer zum Zangenmaul liegende Schwenkachse 12 schwenkbar angeflanscht. Die Greifzange 2 weist eine Halterung 5 auf, an dessen unteren Ende eine untere Zangenbacke 4 angeschraubt ist. Parallel zu dieser unteren Zangenbacke 4 ist eine obere Zangenbacke 3 höhenverschieblich an der Halterung 5 angebracht. Dazu weist die Halterung 5 Führungsschienen 11 auf, in welche die obere Zangenbacke 3 gelagert ist. Für die Höhenverstellung sind ferner zwei Zylinder 6 vorgesehen, deren Kolbenstange 7 fest mit der oberen Zangenbacke 3 verbunden ist. Außerdem weist die Halterung 5 parallel zu den Führungsschienen 11 verlaufende Zahnstangen 8 auf, in welche Zahnräder 9 eingreifen, die auf einer in der oberen Zangebacke 3 gelagerten Welle 10 befestigt sind. Mittels dieser Zahnrad-Zahnstangen-Kombination soll ein Gleichlauf der oberen Zangenbacke 3 in den beiden Führungsschienen 11 gewährleistet werden. Ein Verkanten der oberen Zangenbacke ist damit nicht mehr möglich.

Mit dem Gehäuse 17 für die Drehachse 16 ist ortsfest ein Halter für einen Schwenkzylinder 13 (Zylinderhalter 33) verbunden. In diesem Zylinderhalter 33 ist der Schwenkzylinder 13 um die Schwenkachse 30 schwenkbar gelagert. Der Schwenkzylinder 13 wiederum greift mit seiner Kolbenstange 31 an der Greifzange 2 an. Das Ende der Kolbenstange 31 ist dabei schwenkbar um die Schwenkachse 32 an der Greifzange 2 befestigt. Durch Betätigen des Schwenkzylinders 13 kann die Greifzange 2 um die parallel zur Tischplatte und quer zum Zangenmaul liegende Schwenkachse 12 geschwenkt werden.

Zur Gewichtsersparnis sind in der Halterung 5 Ausnehmungen 14 vorgesehen. Um dennoch eine stabile Halterung zu erhalten, sind auf der Rückseite der Halterung 5 Versteifungsrippen 18 angebracht. Ferner ist die untere Zangenbacke 4 in mehrere Zinken 15 unterteilt, welche im Gegensatz zu einer massiven unteren Zangenbacke 4 ebenfalls zu einer Gewichtsersparnis führen.

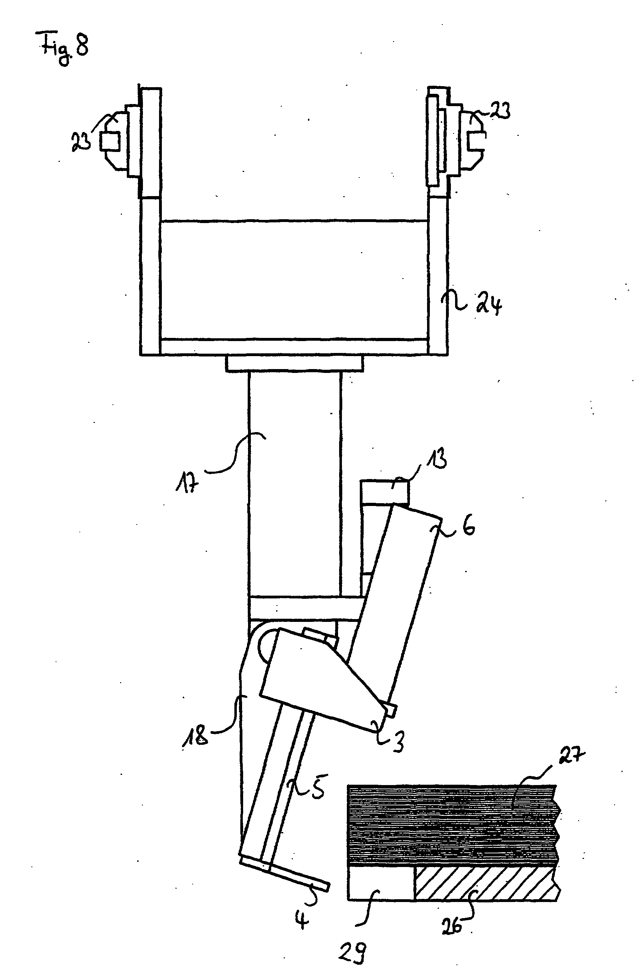

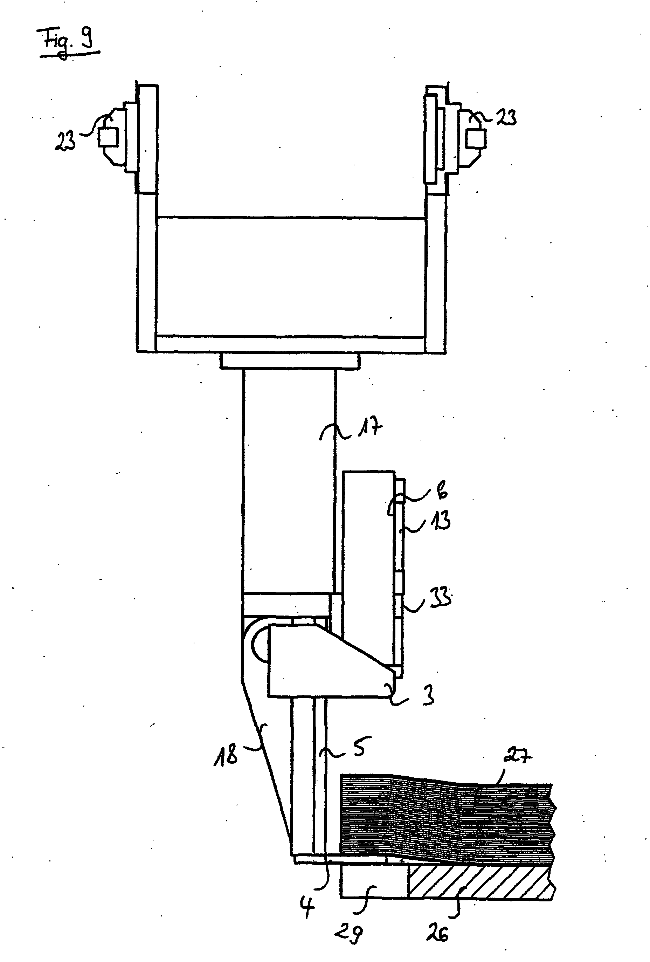

Im Folgenden soll nun, insbesondere anhand der Fig. 8 und 9 das Ergreifen einer Papierlage mittels der Greifzange 2 erläutert werden. Dazu liegt die Lage 27 bündig abschließend an der Kante des Tisches 26 an. Die Kante des Tisches 26 weist dabei Ausnehmungen 29 auf, welche den Abmessungen der Zinken 15 der unteren Zangenbacke 4 entsprechen. In den Bereichen dieser Ausnehmungen 29 ist daher der Rand der Lage 27 frei zugänglich. Der Greifer 1 bzw. die Greifzange 2 wird nun durch Verfahren des Schlittens 24 und der Traverse 28 sowie Drehen des Greifers 1 um die Drehachse 16 vor der Lage 27 positioniert. Anschließend wird mittels des Schwenkzylinders 13 die Greifzange 2 nach hinten geschwenkt. Das freie Ende der unteren Zangenbacke 4 kommt dabei in einer Ebene unterhalb der Papierlage 27 zum Liegen. Sodann wird der Greifer 1 nach vorne gefahren, so dass die Zinken 15 der unteren Zangenbacke 4 in die Ausnehmungen 29 des Tisches 26 hineingreifen. Weiter wird dann die Greifzange 2 zurückgeschwenkt, so dass die untere zangenbacke 4 die Kante der Lage 27 anhebt. Die untere Zangenbacke 4 kommt so in einer Ebene oberhalb der Tischplatte des Tisches 26 zum Liegen und die Lage 27 liegt in dem geöffneten Zangenmaul der Greifzange 2. Wird nun die obere Zangenbacke 3 nach unten gegen die Lage 27 gefahren, ist die Lage 27 fest in der Greifzange 2 eingespannt. Mittels der Greifzange 2 kann nun die Lage 27 beliebig auf der Tischplatte verfahren werden. Sie kann dabei sowohl gedreht werden als auch in beliebige Positionen auf dem Tisch 26 linear verschoben werden.

### Bezugszeichenliste

- 1: Greifer
- 2: Greifzange
- 3: obere Zangenbacke
- 4: untere Zangenbacke
- 5: Halterung
- 6: Zylinder für die Betätigung der oberen Zangenbacke
- 7: Kolbenstange
- 8: Zahnstange
- 9: Zahnrad
- 10: Welle
- 11: Führungsschienen
- 12: Schwenkachse für die Greifzange
- 13: Schwenkzylinder
- 14: Ausnehmungen in der Halterung
- 15: Zinken
- 16: Drehachse
- 17: Gehäuse für die Drehachse
- 18: Versteifungsrippen
- 19: Lager
- 20: Kurbel
- 21: Drehzylinder
- 22: Widerlager
- 23: Führungselemente
- 24: Schlitten
- 25: Ständer
- 26: Tisch
- 27: Lage
- 28: Traverse
- 29: Ausnehmungen
- 30: Schwenkachse Schwenkzylinder-Zylinderhalter
- 31: Kolbenstange
- 32: Schwenkachse Kolbenstange-Greifzange
- 33: Zylinderhalter

## Patentansprüche

1. Verfahren zum Ergreifen, Transportieren und Positionieren, insbesondere von Lagen aus gestapeltem, blattförmigem Gut auf einer Arbeitsfläche, bei dem mittels eines eine Greifzange (2) aufweisenden Greifers (1) das Positionieren und Transportieren der Lage (27) erfolgt, **dadurch gekennzeichnet, dass** nach horizontalem Verfahren der Greifzange (2) in vorgegebene Position zur Lage (27) diese **dadurch** ergriffen wird, dass die geöffnete Greifzange (2) aus ihrer senkrechten Position zunächst so verschwenkt wird, dass sich das freie Ende der unteren Zangenbacke (4) der Greifzange (2) unterhalb der Lage (27) befindet, dass anschließend die Greifzange (2) in Richtung der Lage (27) verfahren und dabei die untere Zangenbacke unter die Lage geschoben wird, dass danach die Greifzange in senkrechte Stellung zurückgeschwenkt wird, wobei die Lage (27) leicht angehoben wird und dass dann die Greifzange (2) geschlossen wird.

2. Verfahren nach Anspruch 1 , **dadurch gekennzeichnet dass** die Lage (27) zum Ergreifen durch die Greifzange (2) derart auf der Arbeitsfläche positioniert wird, dass die zu ergreifende Kante der Lage (27) frei zugänglich ist.

3. Vorrichtung zur Durchführung des Verfahrens nach Anspruch 1 und 2, bestehend aus zumindest einem eine Greifzange (2) aufweisenden Greifer (1), welcher im wesentlichen parallel zur Arbeitsfläche verfahrbar ist, wobei eine der Zangenbacken (3, 4) höhenverstellbar ist, der Greifer (1) um eine im wesentlichen parallel zur Arbeitsfläche und im wesentlichen quer zum Zangenmaul liegenden Schwenkachse (12) schwenkbar ist und die Arbeitsfläche und/oder deren Kanten Ausnehmungen (29) aufweisen, deren Abmessungen denen der unteren Zangenbacke (4) angepasst sind.

4. Vorrichtung nach Anspruch 1, **dadurch gekennzeichnet, dass** der Greifer (1) parallel zur Arbeitsfläche drehbar ist.

5. Vorrichtung nach Anspruch 1 und 2, **dadurch gekennzeichnet, dass** nur die obere Zangenbacke (3) der Greifzange (2) zum Öffnen und Schließen der Greifzange (2) verstellbar ist.

6. Vorrichtung nach Anspruch 1 und einem der Ansprüche 2 oder 3, **dadurch gekennzeichnet, dass** nur die untere Zangenbacke (4) um die Schwenkachse (12) verschwenkbar gelagert ist.

7. Vorrichtung nach Anspruch 1 und einem der Ansprüche 2 oder 3, **dadurch gekennzeichnet, dass** nur die untere Zangenbacke (4) und deren Halterung (5) um die Schwenkachse (12) verschwenkbar ist.

8. Vorrichtung nach Anspruch 1 und einem der Ansprüche 2 bis 5, **dadurch gekennzeichnet, dass** der Greifer (1) an einem in einer ersten Richtung parallel zur Arbeitsfläche verfahrbaren Schlitten (24) angebracht ist.

9. Vorrichtung nach Anspruch 6, **dadurch gekennzeichnet, dass** der Schlitten (24) in einer zweiten, senkrecht zur ersten Richtung, verfahrbar ist.

10. Vorrichtung nach Anspruch 8, **dadurch gekennzeichnet, dass** die Ausnehmungen (29) Kehlen sind.

11. Vorrichtung nach Anspruch 1 und einem der Ansprüche 2 bis 9, **dadurch gekennzeichnet, dass** die Kanten der Arbeitsflächen abgeschrägt oder gekehlt sind oder Ausnehmungen (29) aufweisen.

12. Vorrichtung nach einem der Ansprüche 3 bis 10, **dadurch gekennzeichnet, dass** die untere Zangenbacke (4) gabelförmig mit Zinken (15) aus-gebildet ist.

13. Vorrichtung nach einem der Ansprüche 8 bis 12, **dadurch gekennzeichnet, dass** die Ausnehmungen verschließbar sind.

## Claims

1. Method for taking hold of, transporting and positioning in particular layers of stacked sheet-shaped material on a working surface, in which the positioning and transporting of the layer (27) is carried out by means of a gripper (1) having gripping tongs (2), **characterized in that**, after horizontal movement of the gripping tongs (2) into a predetermined position in relation to the layer (27), the latter is taken hold of by the opened gripping tongs (2) first being pivoted out of their vertical position in such a way that the free end of the lower jaw (4) of the gripping tongs (2) is located below the layer (27), **in that** the gripping tongs (2) are then moved in the direction of the layer (27) and in the course of this the lower jaw of the tongs is pushed under the layer, **in that** the gripping tongs are subsequently pivoted back into vertical position, the layer (27) being raised slightly, and **in that** the gripping tongs (2) are then closed.

2. Method according to Claim 1, **characterized in that**, for being taken hold of by the gripping tongs (2), the layer (27) is positioned on the working surface in such a way that that edge of the layer (27) to be taken hold of is freely accessible.

3. Device for carrying out the method according to Claim 1 and 2, consisting of at least one gripper (1) having gripping tongs (2), which gripper can be moved essentially parallel to the working surface, one of the jaws (3, 4) of the tongs being height-adjustable, the gripper (1) being pivotable about a pivoting axis (12) lying essentially parallel to the working surface and essentially at right angles to the bit of the tongs, and the working surface and/or its edges having cutouts (29), the dimensions of which are adapted to those of the lower jaw (4) of the tongs.

4. Device according to Claim 1, **characterized in that** the gripper (1) is rotatable parallel to the working surface.

5. Device according to Claim 1 and 2, **characterized in that** only the upper jaw (3) of the gripping tongs (2) is adjustable for opening and closing the gripping tongs (2).

6. Device according to Claim 1 and one of Claims 2 and 3, **characterized in that** only the lower jaw (4) of the tongs is mounted pivotably about the pivoting axis (12).

7. Device according to Claim 1 and one of Claims 2 and 3, **characterized in that** only the lower jaw (4) of the tongs and its carrier (5) is pivotable about the pivoting axis (12).

8. Device according to Claim 1 and one of Claims 2 to 5, **characterized in that** the gripper (1) is attached to a carriage (24) which can be moved in a first direction parallel to the working surface.

9. Device according to Claim 6, **characterized in that** the carriage (24) can be moved in a second direction at right angles to the first direction.

10. Device according to Claim 8, **characterized in that** the cutouts (29) are grooves.

11. Device according to Claim 1 and one of Claims 2 to 9, **characterized in that** the edges of the working surfaces are bevelled or grooved or have cutouts (29).

12. Device according to one of Claims 3 to 10, **characterized in that** the lower jaw (4) of the tongs is of fork-shaped design with prongs (15).

13. Device according to one of Claims 8 to 12, **characterized in that** the cutouts can be closed.

## Revendications

1. Procédé pour saisir, transporter et positionner, notamment des rames de matériau en feuille empilé, sur une surface de travail, dans lequel le positionnement et le transport de la rame (27) s'effectuent au moyen d'un dispositif de préhension (1) présentant une griffe de préhension (2), **caractérisé en ce que**, après le déplacement horizontal de la griffe de préhension (2) dans une position prédéfinie par rapport à la rame (27), celle-ci est saisie par le fait que la griffe de préhension (2) ouverte est d'abord pivotée de sa position verticale de telle sorte que l'extrémité libre de la mâchoire de griffe inférieure (4) de la griffe de préhension (2) se situe en dessous de la rame (27), qu'ensuite, la griffe de préhension (2) est déplacée dans la direction de la rame (27) et que la mâchoire de griffe inférieure est alors poussée sous la rame, qu'ensuite la griffe de préhension est ramenée par pivotement dans la position verticale, la rame (27) étant ainsi légèrement soulevée et qu'ensuite la griffe de préhension (2) est fermée.

2. Procédé selon la revendication 1, **caractérisé en ce que** la rame (27) est positionnée sur la surface de travail pour permettre la saisie par la griffe de préhension (2) de telle sorte que le bord de la rame (27) à saisir soit librement accessible.

3. Dispositif pour mettre en oeuvre le procédé selon la revendication 1 et 2, se composant d'au moins un dispositif de préhension (1) présentant une griffe de préhension (2), lequel peut être déplacé essentiellement parallèlement à la surface de travail, l'une des mâchoires de griffe (3, 4) étant déplaçable en hauteur, le dispositif de préhension (1) pouvant pivoter autour d'un axe de pivotement (12) situé essentiellement parallèlement à la surface de travail et essentiellement transversalement au mors de la griffe et la surface de travail et/ou ses bords présentant des évidements (29) dont les dimensions sont adaptées à celles de la mâchoire de griffe inférieure (4).

4. Dispositif selon la revendication 1, **caractérisé en ce que** le dispositif de préhension (1) peut tourner parallèlement à la surface de travail.

5. Dispositif selon la revendication 1 et 2, **caractérisé en ce que** seulement la mâchoire de griffe supérieure (3) de la griffe de préhension (2) peut être déplacée pour l'ouverture et la fermeture de la griffe de préhension (2).

6. Dispositif selon la revendication 1 et l'une quelconque des revendications 2 ou 3, **caractérisé en ce que** seulement la mâchoire de griffe inférieure (4) est montée de manière à pouvoir pivoter autour de l'axe de pivotement (12).

7. Dispositif selon la revendication 1 et l'une quelconque des revendications 2 ou 3, **caractérisé en ce que** seulement la mâchoire de griffe inférieure (4) et sa fixation (5) peuvent pivoter autour de l'axe de pivotement (12).

8. Dispositif selon la revendication 1 et l'une quelconque des revendications 2 à 5, **caractérisé en ce que** le dispositif de préhension (1) est monté sur un chariot (24) déplaçable dans une première direction parallèlement à la surface de travail.

9. Dispositif selon la revendication 6, **caractérisé en ce que** le chariot (24) peut être déplacé dans une deuxième direction perpendiculaire à la première direction.

10. Dispositif selon la revendication 8, **caractérisé en ce que** les évidements (29) sont des creusures.

11. Dispositif selon la revendication 1 et l'une quelconque des revendications 2 à 9, **caractérisé en ce que** les bords des surfaces de travail sont biseautés ou creusés ou présentent des évidements (29).

12. Dispositif selon l'une quelconque des revendications 3 à 10, **caractérisé en ce que** la mâchoire de griffe inférieure (4) est réalisée en forme de fourche avec des dents (15).

13. Dispositif selon l'une quelconque des revendications 8 à 12, **caractérisé en ce que** les évidements peuvent être fermés.
